# NEW EUROPEAN PATENT SPECIFICATION

(11) **EP 3 285 132 B2**
(45) Date of publication and mention of the opposition decision: **19.10.2022**
(45) Mention of the grant of the patent: 12.06.2019
(21) Application number: 17186259.2
(22) Date of filing: 15.08.2017
(51) Int. Cl.: B01F 3/18, B01F 3/06, G05D 11/13

(54) **METHOD AND DISPENSING APPARATUS FOR DISPENSING A POWDER AND/OR GRANULAR MATERIAL**
VERFAHREN UND ABGABEVORRICHTUNG ZUR ABGABE EINES PULVERS UND/ODER GRANULATS
PROCÉDÉ ET APPAREIL DE DISTRIBUTION DESTINÉ À DISTRIBUER UNE POUDRE ET/OU UN MATÉRIAU GRANULAIRE

(30) Priority: 15.08.2016 FI 20165615
(43) Date of publication of application: 21.02.2018
(60) Divisional application: 19178897.5
(73) Proprietor: Powdea Technologies Oy, 48400 Kotka (FI)
(72) Inventor: KOUSA, Jukka, 48400 Kotka (FI)
(74) Representative: Genip Oy

(56) References cited:
- EP-A1- 1 688 718
- EP-A2- 0 304 093
- WO-A1-96/01175
- DE-B3- 10 317 001
- US-A1- 2006 165 495

## Description

The invention relates to a method according to the preamble of claim 1 for dispensing a powder and/or granular material. The invention further relates to a dispensing apparatus for dispensing a powder and/or granular material.

In the devices of prior art, powder and/or granular materials are fed based on weighing simultaneously from several locations to a mechanical screw conveyor and the materials are transferred in the screw conveyor into a collecting container. The structure of the mixing screw conveyor is composed of a pipe, inside which rotates a spiral screw. For this reason, there remains in the clearance of the screw pipe and the spiral powder, which never gets out from the conveyor. As the mixing lot changes, the conveyor must be opened and cleaned of the previous material. For this reason, a mixing screw is poorly suited for mixing changing materials.

Another disadvantage in dispensing relates to adequately precise measurement of the material amount. When forming a powder and/or granular material mixture, the amounts of the materials in the mixture are usually defined. In order to achieve the desired mixture ratio, an adequately precise measurement of amounts is required.

Document WO 9601175 A1 discloses a method for preparing a mix comprising adherent powder material and particulate material using mechanical and/or pneumatic conveying equipment at risk of blocking by the powder material. The conveying equipment comprises a separate holding bin into which separate materials are dispensed. Only after the materials are in the bin the materials are conveyed from the bin to a mixer by a pneumatic conveyor. The air flow in the conveyor cannot be adequately controlled in practice due to the manner of which the material is handled.

Document US 2006165495 A1 discloses an arrangement where bulk material is first metered into an input device which dispenses the material into a screw conveyor. The screw conveyor operates as batch container which is emptied a number of times into the transport line in the system.

The object of the invention is to elevate the current state of the art in the field by presenting such a dispensing apparatus and method for dispensing a powder and/or granular material, by which the disadvantages of prior art are minimized.

The objects of the invention are achieved by the characteristics defined by the independent claims. The other additional characteristic features to the invention are disclosed in the accompanying dependent claims.

In a method according to the invention for dispensing a powder and/or granular material by a dispensing apparatus comprising at least two dispensing containers and a transfer apparatus,
- material is dispensed from at least two dispensing containers into a transfer apparatus, by means of which the material is transferred for further processing,
- a target mixing ratio in the material mixture for each material contained in the dispensing container is set,
- the mass flow of the material dispensed from each dispensing container is defined independently,
- the dispensing of the material dispensed from the dispensing container into the transfer apparatus is controlled on the basis of the mass flow of the material dispensed from the dispensing container and the target mixture ratio, and, during dispensing, each dispensing container is simultaneously maintained at ambient pressure and the material is dispensed into the transfer apparatus such that the pressure effect of the transfer apparatus on the dispensing container under ambient pressure is simultaneously minimized.

Dispensing preferably has a starting time and an ending time, i.e., in this case, the dispensing is a batch process. In a method according to the invention, the dispensing of at least two materials from respective dispensing container is started and ended simultaneously. The dispensing of at least two materials during the entire dispensing period enables effective mixing of these materials with each other.

In a method according to an embodiment of the invention, the mass flow of the material dispensed from each dispensing container is defined by weighing the dispensing container and the material that it contains at pre-defined time intervals, and the dispensing of the material into the transfer apparatus is controlled by forming a control signal based on the defined mass flow setting of the material.

In a method according to the invention, the transfer apparatus functions as a pneumatic conveyor and material is dispensed from the dispensing container using a dispensing and sealing device, which is arranged between the dispensing container and the pneumatic conveyor, and which, during dispensing, simultaneously minimizes transmission of the pressure effect of the pneumatic conveyor on the dispensing container. In this manner, the precision of weighing, which is i.a. a prerequisite to precise dispensing, improves significantly. The dispensing and sealing device substantially prevents a direct free gas flow between the dispensing and sealing device and the pneumatic conveyor.

In a method according to an embodiment of the invention, material is dispensed from the dispensing container using a feeder device and the dispensing and sealing device arranged one after the other in the direction of flow of the material, and the feeder device and dispensing and sealing device are controlled on the basis of the mass flow of each dispensed material and target mixing ratio.

According to an embodiment of the invention, the transfer apparatus functions as a pneumatic conveyor and, in the method, materials dispensed simultaneously from at least two dispensing containers are mixed in the pneumatic transfer apparatus, while the materials are transferred into the receiving container.

In a method according to an embodiment of the invention, the transfer apparatus functions as a pneumatic conveyor, wherein, during dispensing, replacement air is led from the ambient airspace into the apparatus through a flow connection arranged between the dispensing and sealing device and the dispensing container.

The advantages of the invention are mainly its efficiency and simplicity. The invention enables simultaneous and precise dispensing and mixing of powder-like and/or granular materials, as well as their transfer into a material receiving container. By dispensing is meant herein a combining of materials into a mixture in a controlled manner on the basis of the measurement of the amounts.

The dispensing apparatus for dispensing a powder and/or granular material comprises
- at least two dispensing containers for storing the material to be dispensed for dispensing, wherein each dispensing container is equipped with at least one apparatus indicating the mass of the material contained in the dispensing container,
- a pneumatic transfer apparatus, which is arranged to receive material from the dispensing container and transfer the material for further processing,
- a dispensing and sealing device in connection with each dispensing container adapted to dispense material from the dispensing container into the transfer apparatus,
- a control unit arranged to control the function of the dispensing apparatus.

A control unit of the dispensing apparatus comprises
- data of the target mixing ratio in the material mixture for the materials to be dispensed contained in least two dispensing containers ,
- data of the individual mass flow of dispensing dependent on the target mixing ratio for the material to be dispensed contained in each dispensing container,
- an arrangement for receiving mass data from the apparatus indicating the mass of the material contained in each dispensing container for defining the mass flow of the material dispensed from the dispensing container,
- executable instructions by the control unit for controlling the simultaneous dispensing of the materials dispensed from at least two dispensing containers into a transfer apparatus on the basis of the mass flow of the material and the target mixing ratio.

In the dispensing apparatus, the dispensing and sealing device is arranged to minimize transmission of the negative pressure effect of the transfer apparatus on the dispensing container under ambient pressure and to simultaneously dispense material from the dispensing container into the transfer apparatus.

In this connection, the executable instructions are a computer program or a part of a computer program or corresponding, the executing of which achieves a technical effect. According to the invention, the control unit comprises executable instructions, a computer program, configured to start and end the dispensing of material from at least two storage containers substantially simultaneously.

According to the invention, the dispensing apparatus comprises a dispensing and sealing device in connection with each dispensing container adapted to dispense material from the dispensing container into the transfer apparatus, and said transfer apparatus is a pneumatic transfer apparatus. The dispensing and sealing device is arranged to minimize transmission of the negative pressure effect of the pneumatic conveyor on the dispensing container, and the control unit comprises a computer program configured to control the dispensing and sealing device of each dispensing container independently in order to achieve said target mixing ratio.

According to the invention, the dispensing apparatus comprises a receiving container combined with a pneumatic transfer apparatus, wherein the pneumatic transfer apparatus comprises a transfer pipe and a source of negative pressure coupled downstream of the receiving container in the direction of the gas flow.

According to an embodiment of the invention, said transfer apparatus is a pneumatic transfer apparatus and the apparatus comprises a receiving container and the receiving container comprises a filter unit for separating the material from the gas in a pneumatic transfer arrangement.

According to an embodiment of the invention, the dispensing container comprises a feeder device for feeding a material from the dispensing container into the dispensing and sealing device.

According to an embodiment of the invention, the dispensing apparatus for dispensing a powder and/or granular material comprises at least two dispensing containers to store the material to be dispensed for dispensing, wherein each dispensing container is provided with at least one apparatus indicating the mass of the material contained in the dispensing container, a transfer apparatus, which is arranged to receive material from a dispensing container and to transfer the material for further processing, a dispensing and sealing device in connection with each dispensing container adapted to dispense material from the dispensing container into the transfer apparatus, and in which the dispensing and sealing device is coupled by a flexible coupling with the dispensing container. By means of the flexible coupling, forces are not transmitted between the dispensing container and the dispensing and sealing device, at least not to such an extent that the effect of the coupling on the function of the apparatus indicating mass would be significant. In this manner, it is possible to precisely define the change in the mass of the material contained in the dispensing container within the time unit, in other words, the mass flow of the dispensed material. By using this solution in particular, the force effects caused by the pressure of the pneumatic conveyor on weighing can, for this part, be minimized.

According to an embodiment of the invention, a dispensing apparatus for dispensing a powder and/or granular material comprises at least two dispensing containers to store the material to be dispensed for dispensing, wherein each dispensing container is provided with at least one apparatus indicating the mass of the material contained in the dispensing container, a transfer apparatus, which is arranged to receive material from the dispensing container and to transfer the material for further processing, a dispensing and sealing device in connection with each dispensing container adapted to dispense material from the dispensing container into the transfer apparatus, and from which apparatus is arranged, between the dispensing and sealing device and the dispensing container, a flow connection to the ambient airspace. This causes an effect, by means of which an effect of a possible leak and/or negative pressure is minimized in defining the mass of the material.

According to an embodiment of the invention, the dispensing and sealing device is coupled by a flexible coupling with the dispensing container and from the apparatus is arranged, between the dispensing and sealing device and the dispensing container, a flow connection to the ambient airspace. In this way, it is possible to combine above said advantages achieved by the flexible coupling and the flow connection.

According to an embodiment of the invention, the control unit comprises a computer program configured to control the function of the feeder device and the dispensing and sealing device synchronously such that material is fed from each dispensing container into the transfer apparatus according to said target mixing ratio.

According to an embodiment of the invention, the dispensing and sealing device is a rotary feeder, which can also be referred as a compartment feeder.

According to an embodiment of the invention, the dispensing and sealing device comprises two successive valves, which are arranged to function synchronously such that their functional open-closed state is opposite in relation to each other. In this case, the control apparatus comprises a computer program to control the valves synchronously such that their functional open-closed state is opposite in relation to each other.

According to an embodiment of the invention, the feeder device is a screw conveyor, which transfers the material to be dispensed from the dispensing container into the dispensing and sealing device.

According to an embodiment of the invention, said at least two dispensing containers are accommodated into the storage area and said receiving container is accommodated into a production area separate from the storage area, wherein the distance between the containers is over 10m.

In this connection, the word *material* should be understood as either singular or plural, unless the matter is defined in more detail. A material can be, for example, the raw material used in a process. A process can be, for example, a baking process, wherein the materials are the raw materials of the required dough according to the recipe and, in the method, the materials according to the baking recipe are dispensed and mixed and the raw material mixture is transported into a receiving container. In this connection, the target mixing ratio means the mass flow ratio dispensed from one dispensing container in relation to the sum of the mass flows of the materials dispensed from all the dispensing containers in use.

Using the solution according to the invention, it is possible to successfully mix materials using very small relative concentrations, wherein the concentration of one single material can be even 1:10000.

In the following, the invention and its function are described in more detail by means of reference to the accompanying schematic drawings, in which
Fig. 1
   shows an embodiment of a dispensing apparatus according to the invention,
Fig. 2
   shows an embodiment of a dispensing container according to the invention,
Fig. 3
   shows another embodiment of a dispensing container according to the invention, and
Fig. 4
   shows another dispensing apparatus.

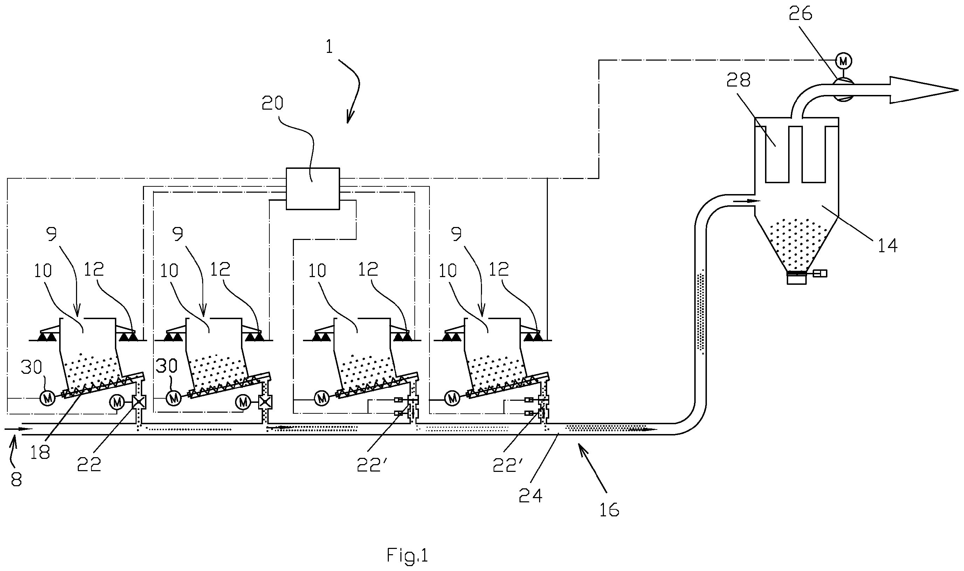

Fig. 1 shows schematically an embodiment of a dispensing apparatus 1 according to the invention. The dispensing apparatus comprises at least two dispensing containers 10. There are four units of these in Fig. 1, wherein, in this case, the material mixture can be composed from four different materials. The dispensing container 10 functions as a storage of the material for dispensing. The dispensing apparatus 1 further comprises at least one receiving container 14 for receiving the materials dispensed from the dispensing containers 10. The apparatus also includes a transfer apparatus 16, which is arranged to receive material from the dispensing container 10 and to transfer the material into a receiving container 14. The dispensing apparatus further comprises a control unit 20. The control unit is, for example, a programmable logic controller or a computer. The dispensing container is substantially in a direct flow connection with the ambient air, so it is then at the same pressure as the ambient pressure. The flow connection can be implemented, for example, through the filling inlet 9 of the dispensing container 10. Even if the filling inlet were to be closed with a lid (not shown in the figure), the flow connection can be maintained by arranging a suitable play in the sealing of the lid or by other manners of achieving said flow connection. In terms of function of the solution according to the invention, it is important that the dispensing container is maintained at the ambient pressure.

The transfer apparatus 16 runs past each dispensing container 10 terminating at the receiving container 14. The transfer apparatus is preferably a pneumatic conveyor comprising a transfer pipe 24 and a filter unit 28 adapted into the receiving container 14 as well as a source of negative pressure 26 coupled with the pipe 24 downstream of the receiving container 14 in the direction of the gas flow. Each dispensing container is coupled with the same transfer pipe 24 at consecutive locations in the pipe. The control unit 20 of the apparatus is configured to control the function of the source of negative pressure 26, wherein the control unit comprises a computer program to control the function of the source of negative pressure on the basis of the target mixing ratio of the material to be dispensed contained in at least two dispensing containers 10, the dispensing speed dependent on the target mixing ratio of the material to be dispensed contained in said at least two dispensing containers and/or the measured negative pressure level. In practise, the source of negative pressure can be, for example, a fan, compressor, vacuum pump or corresponding.

The dispensing container 10 includes, as a fundamental part, an apparatus 12 indicating the mass of the material contained in the dispensing container, which is in a data transfer connection with the control unit 20 belonging to the apparatus. According to a preferred embodiment of the invention, the apparatus 12 indicating the mass of the material comprises a dispensing container and an apparatus measuring the mass of the material it contains that is suitably calibrated and indicates only the amount of the material in the dispensing container. By defining the reduction in the mass of the material and defining it at adequately frequent time intervals or substantially continuously per time unit, the mass flow of the material dispensed can be defined. The measurement can be based, for example, on strain gauge technology. In other words, the amount of the material dispensed from each dispensing container 10 is defined substantially by continuously weighing the dispensing container 10 and the material it contains.

Each dispensing container 10 is equipped with a dispensing and sealing device 22, 22' adapted to dispense material from the dispensing container 10 into the transfer apparatus 16 such that, when dispensing, the effect of gas pressure from the transfer pipe 24 on the dispensing container is minimized. The transfer pipe 24 of the pneumatic conveyor functioning as the transfer apparatus is coupled with each dispensing container 10 via the dispensing and sealing device 22, 22'. At each dispensing and sealing device 22, 22', there exists in the transfer apparatus a significantly lower total pressure than in the dispensing container 10, which is at approximately the ambient pressure. The dispensing container is thus arranged to be at the air pressure, wherein, for dispensing the material, pressurized air is not led into the dispensing container 10, nor is the dispensing container otherwise rendered to be at positive pressure. The dispensing container preferably has a material filling inlet, which is arranged to equalize pressure between the environment and the inside of the dispensing container 10. According to a preferred embodiment, the dispensing and sealing device is a compartment feeder 22. According to another preferred embodiment, the dispensing and sealing device comprises two successive valves 22', which are arranged to function synchronously such that their functional open-closed state is opposite in relation to each other. In other words, only one of the valves is in the open state at a time. Preferably, the control unit comprises a computer program to control the function of said valves synchronously such that their functional open-closed state is opposite in relation to each other. The dispensing and sealing device is in a data transfer connection with the control unit 20 and the control unit is thus adapted to control their function to implement the dispensing method. The control unit comprises a computer program for controlling the dispensing and sealing device of each dispensing container independently in order to achieve said target mixing ratio. It is essential that a precise dispensing is provided by the dispensing and sealing device and that it minimizes the pressure effect of the transfer apparatus on the storage container and on the weighing.

In a dispensing device 1 according to the invention, the control unit 20 comprises data of the target mixing ratio in the receiving container 14 of the material to be dispensed contained in at least two dispensing containers, as well as data of the dispensing speed dependent on the target mixing ratio of the material to be dispensed contained in each dispensing container 10, an arrangement to receive data from the apparatus 12 indicating the mass of the material contained in each dispensing container in order to define the amount of material dispensed from the dispensing container, and further, a computer program for controlling the feed amount of the material dispensed from the dispensing container 10 into the transfer apparatus 16 on the basis of said target dispensing speed, the amount of the material dispensed from the dispensing container and the target mixing ratio. In this manner, the apparatus is arranged to function such that material is fed into the transfer pipe at the correct speeds in order to achieve an optimal mixing result during transfer of the materials.

In Fig. 1, each dispensing container 10 is further equipped with a feeder device 18, such as a screw conveyor for unloading a material from the dispensing container 10 onwards. Herein, the device is referred to as a feeder device, because it is arranged to feed a material from the dispensing container into the dispensing and sealing device 22, which is adapted to be the next in the direction of run of the material after the feeder device of the dispensing apparatus 1. The purpose of the dispensing and sealing device 22 is to allow transfer of a material from the dispensing container in a controlled manner into the transfer apparatus 16 and to simultaneously prevent the effect of the gas flow 8 from entering from the transfer pipe 24 into the dispensing container. In some rare cases, if the shape of the dispensing container and the material to be processed are suitable, the material can be unloaded directly into the dispensing and sealing device without a feeder device.

The feeder device comprises a drive, such as an electric motor 30, which is arranged in a data transfer connection with the control unit 20. In this manner, the control unit 20 is arranged to control the function of the motor and thus the feeder device 18. The control unit 20 comprises a computer program for controlling the feed amount of the material dispensed from the dispensing container into the transfer apparatus. Said computer program comprises instructions executable in the control unit in order to control the feed amount of the material dispensed from the dispensing container into the transfer apparatus as well as means in the control unit for performing these instructions.

According to the invention, material flow and material amounts are handled as a mass flow and as a mass, even though per se the feeder device 18 and the dispensing and sealing devices 20, 22' produce volume flow. However, the characteristics of the powder and/or granular material can be suchlike that the mass flow of a material running through a device functioning at standard capacity, in other words, at standard volume flow, can also change over time. The control unit thus comprises an arrangement for producing a control signal suitable for the motors of the feeder device 18 and a dispensing and sealing devices according to the mass flow setpoint produced by the control unit. Such a control signal can be, for example, a frequency setpoint to a frequency converter controlling the motor.

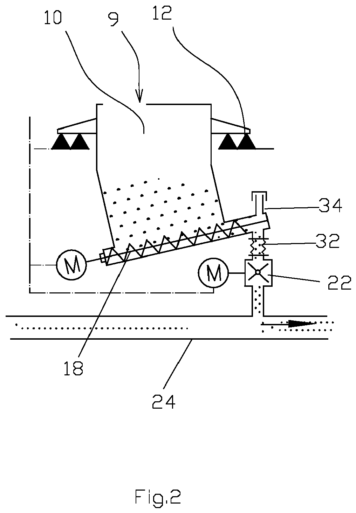

Fig. 2 shows an embodiment of a dispensing container 10 of a dispensing device according to the invention. It can be seen from the figure that the mass of the dispensing container 10 is transmitted to the structures supporting it via the mass-indicating apparatus 12. In this embodiment, the dispensing and sealing device 22 is coupled with the dispensing container 10, more specifically, with the feeder device 18 of the dispensing container 10, by a flexible coupling 32. The flexible coupling can be implemented, for example, by means of bellows or corresponding. By means of the flexible coupling, forces are not transmitted between the dispensing container and the dispensing and sealing device, wherein, due to the flexible coupling 32, the effect of the dispensing and sealing device 22 and the thereto-attached transfer apparatus 16 on the function of the apparatus 12 indicating the mass of a material is minimized, and it can be calibrated to indicate more precisely only the amount of material in the dispensing container. Further, the dispensing and sealing device prevents the effect of the prevailing gas pressure (negative or positive pressure) in the transfer apparatus 16, which, in the figure, is thus a pneumatic conveyor, on the function of the apparatus 12 indicating the mass of the material, wherein the amount of the material leaving the dispensing container can be precisely measured and controlled.

Fig. 2 further shows, how an optional flow connection 34, between the dispensing and sealing device 22 and the dispensing container 10, from the apparatus to the ambient airspace is arranged. This can be achieved by arranging into the wall, for example, a flow connection, the flow opening of which is suitably protected. By means of such a flow connection, a possible effect from a gas leak of the dispensing and sealing device 22 is, in practise, eliminated. Thus, consequently, the pressure of the transfer pipe 24 is not able to affect the dispensing container possibly via the dispensing and sealing device 22, rather it is compensated for by the replacement air flowing via the flow connection, the access of which into the apparatus is allowed in a controlled manner.

In general, the apparatus functions such that material is dispensed from at least two dispensing containers 10 into the transfer apparatus 16, by means of which the material is transferred into the receiving container. Thus, the transfer apparatus functions as a pneumatic conveyor and material is dispensed from the dispensing container using the dispensing and sealing device, which is used to transfer the material into the transfer apparatus and which simultaneously minimizes the transmission of the pressure effect of the pneumatic conveyor on the dispensing container.

The target mixing ratio of the material contained in each dispensing container and the total amount to be dispensed in the receiving container is set as that desired and the dispensing speed dependent on the target mixing ratio of the material to be dispensed contained in each dispensing container is adjusted during dispensing. In this manner, into the gas flow is brought material from two or more feeder containers simultaneously and substantially continuously. The amount of the material dispensed from each dispensing container substantially continuously, and the feed amount of dispensed material from the dispensing container into the transfer apparatus is controlled on the basis of said target dispensing speed, the amount of dispensed material from the dispensing containers and the target mixing ratio. In this manner, a mixture is created in the receiving container, which is adequately homogenous and in which the materials are evenly mixed.

The function of the negative pressure source of the pneumatic conveyor is controlled on the basis of the target mixing ratio of the material to be dispensed contained in said at least two dispensing containers, the dispensing speed dependent on the target mixing ratio of the material to be dispensed contained in said at least two dispensing containers and/or the measured negative pressure level.

When the apparatus is operating, the material dispensed from two or more dispensing containers 10 is mixed in a pneumatic transfer apparatus 16, while the material is transferred into the receiving container.

The gas flowing in the transfer pipe 24, preferably such as air 8, is caused to flow at a 5 - 40 m/s speed by means of the source of negative pressure 26. The gas 8 flowing in the transfer pipe 24 transports the material dispensed from the dispensing containers 10 into the receiving container 14, in which the material is separated from the gas used for transferring the material by means of a filter unit 28. The materials mixed in the transfer pipe 24 settle to the bottom of the receiving container 14, from which material can be removed for further use in a desired manner.

The method is implemented such that, by the apparatus, in the receiving container is produced according to a pre-defined recipe one lot of a mixture of powder and/or granular materials. For the production of the lot is defined a starting time, wherein the unloading, in other words, dispensing, from at least two or from each dispensing container 10 is started simultaneously, and an ending time, wherein the unloading, in other words, dispensing, from at least two dispensing containers is ended simultaneously, and the unloading, in other words, dispensing, from each dispensing container is controlled on the basis of the mass flow of the material dispensed from the dispensing container of the dispensed material and the target mixing ratio of the recipe.

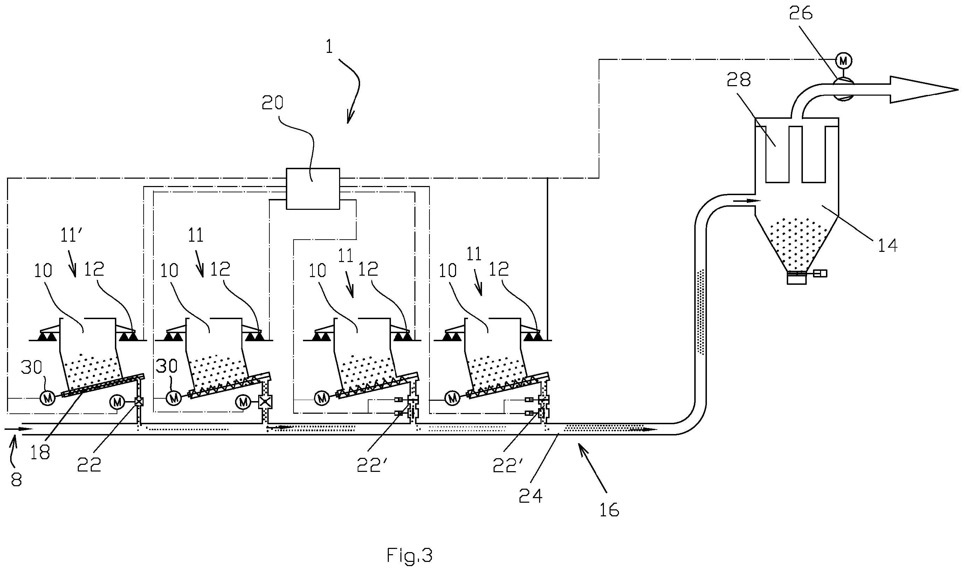

With reference to Fig. 3, in the following is described an embodiment of the invention. The dispensing apparatus 1 comprises several dispensing arrangements 11', 11, which, in turn, are composed mainly of a dispensing container 10, a feeder device and a dispensing and sealing device 2, 22'. According to an embodiment of the invention, the dispensing arrangements of the dispensing device 1 comprise at least two dispensing arrangement groups 11, 11', in which the dispensing arrangements of one group are mechanically identical, but in which the dispensing arrangements of the first group 11' are different, typically smaller in capacity than the dispensing arrangements 11 of the second group. In Fig. 3, the first group includes one dispensing arrangement 11' and the second group three dispensing arrangements 11. In this case, from the first dispensing group can be dispensed a material having a mixing ratio one order in size smaller than from the second dispensing group 11. In this case, the maximum capacity of the dispensing arrangement of the first group 11' is less than 1/10 the maximum capacity of the dispensing arrangements of the other group.

The arrangements of the control unit in order to achieve various operations can be, for example, computer programs, data banks, functions, etc., wherein the control unit comprises one or more control computers.

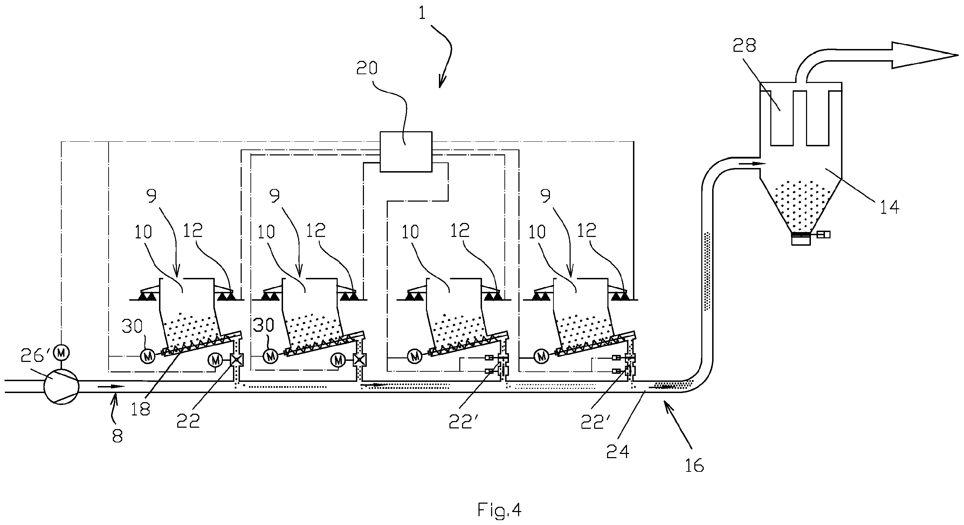

Fig. 4 shows a solution otherwise corresponding to Fig. 1, but, in this, the pneumatic conveyor is a pressurized conveyer at positive pressure. In this case, the apparatus 1 has a positive pressure source 26', which is located in the direction of the gas flow upstream from the connection site of the transfer apparatus 16 of each dispensing container 10. In practise, the positive pressure source can be, for example, a fan, compressor or corresponding. In this embodiment, the task of the dispensing and sealing device 22 is to allow the transfer of material from the dispensing containers in a controlled manner into the pneumatic transfer apparatus 16 and to simultaneously prevent the gas flow 8 from travelling from the transfer pipe 24 into the dispensing container. At each dispensing and sealing device 22, 22' there exists in the transfer apparatus a significantly higher total pressure than in the dispensing container 10, which is at approximately ambient pressure.

It should be noted that in the above are presented only a few preferred embodiments of the invention. The features presented in connection with various embodiments can, within the scope of the basic idea of the invention, also be used in connection with other embodiments and/or combined from the presented features into various entities, provided that this is desired and there are technical prerequisites for this purpose.

## Claims

1. A method for dispensing a powder and/or granular material by a dispensing apparatus (1), in which method
- material is dispensed simultaneously from at least two dispensing containers (10) of the dispensing apparatus (1),
- a target mixing ratio for the material dispensed from each one of the at least two the dispensing containers (10) is set,
- the mass flow of the material dispensed from each one of the at least two dispensing containers (10) is defined independently by means of at least one apparatus (12) indicating the mass of the material in each one of the at least two dispensing containers (10),
- the material is dispensed simultaneously from each one of the at least two dispensing containers (10) into a gas flow generated by a source of negative pressure (26) in a transfer pipe (24) of a pneumatic transfer apparatus (16), at consecutive locations in the pipe, by means of which pneumatic transfer apparatus (16) the material is transferred to a receiving container (14) combined with the pneumatic transfer apparatus (16), wherein the source of negative pressure is coupled downstream of the receiving container (14) in the direction of the gas flow,
- the material dispensed from each one of the dispensing containers into the transfer pipe (24) is controlled on the basis of the mass flow of the material dispensed and the target mixing ratio,
- the material is dispensed into the pneumatic conveyor (16) using a dispensing and sealing device (22, 22'), which simultaneously minimizes transmission of the negative pressure effect of the pneumatic conveyor on the dispensing container (10), **characterized in that**
- in the method, each dispensing container (10) is maintained at ambient pressure by a direct flow connection with the ambient air,
- dispensing of the at least two materials is started and ended simultaneously.

2. A method according to claim 1, **characterized in that**, in the method, the mass flow of the material dispensed from each dispensing container (10) is defined by weighing the dispensing container (10) and the material that it contains at pre-defined time intervals during dispensing, and that the dispensing is controlled by forming a control signal based on the defined mass flow setting of the material as well as on the basis of the weighing.

3. A method according to claim 1, **characterized in that**, in the method, the material is dispensed from the dispensing container using a feeder device (18) and the dispensing and sealing device (22, 22') arranged one after the other in the direction of flow of the material, and that both the feeder device (18) and the dispensing and sealing device (22, 22') are controlled on the basis of the mass flow of each dispensed material and/or the target mixing ratio.

4. A method according to claim 1, **characterized in that**, in the method, the transfer apparatus (16) functions as a pneumatic conveyor, and that, in the method, replacement air is led into the apparatus through a flow connection to the ambient airspace arranged between the dispensing and sealing device (22, 22') and the dispensing container (10).

5. A dispensing apparatus (1) for dispensing a powder and/or granular material, comprising
- at least two dispensing containers (10) for storing the material to be dispensed for dispensing, wherein each dispensing container (10) is equipped with at least one apparatus (12) indicating the mass of the material contained in the dispensing container,
- a pneumatic transfer apparatus (16) provided with a source of negative pressure (26), which is arranged to receive material from the dispensing container (10) and transfer the material to a receiving container (14) combined with the pneumatic transfer apparatus (16), wherein the source of negative pressure is coupled downstream of the receiving container (14) in the direction of the gas flow,
- a control unit (20) arranged to control the function of the dispensing apparatus (1), the control unit comprising:
- for the materials to be dispensed contained in least two dispensing containers (10), data regarding the target mixing ratio in the material mixture,
- for the material to be dispensed contained in each dispensing container (10), data regarding the individual mass flow of dispensing dependent on the target mixing ratio,
- an arrangement to receive mass data from the apparatus (12) indicating the mass of the material contained in each dispensing container in order to define the mass flow of the material dispensed from the dispensing container,
- executable instructions in the control unit in order to control the simultaneous dispensing of the materials dispensed from at least two dispensing containers (10) into a transfer apparatus on the basis of the mass flow of the material and the target mixing ratio, and
the pneumatic transfer apparatus (16) is arranged to receive material from the dispensing container (10) into a gas flow in a transfer pipe (24) of the pneumatic transfer apparatus and transfer the material for further processing,
the dispensing apparatus further comprising a dispensing and sealing device (22, 22') in connection with each dispensing container (10) adapted to dispense material from the dispensing container into the pneumatic conveyor, which dispensing and sealing device (22, 22') is arranged to minimize transmission of the negative pressure effect of the transfer apparatus on the dispensing container (10) under ambient pressure,
**characterized in that** the dispensing container (10) is in a direct flow connection with the ambient air, and the control unit (20) comprises a computer program configured to start and end the dispensing of material from at least two storage containers substantially simultaneously.

6. A dispensing apparatus according to claim 5, **characterized in that** the control unit (20) comprises a computer program configured to control the dispensing and sealing device (22) of each dispensing container independently in order to achieve said target mixing ratio.

7. A dispensing apparatus according to claim 5, **characterized in that** the dispensing container (10) comprises a feeder device (18) arranged in the direction of flow of the material before the dispensing and sealing device (22, 22') for feeding a material from the dispensing container (10) into the dispensing and sealing device (22, 22').

8. A dispensing apparatus according to claim 5, **characterized in that** the dispensing and sealing device (22, 22') is coupled by a flexible coupling (32) with the dispensing container.

9. A dispensing apparatus according to claim 5, **characterized in that** from the apparatus is arranged, between the dispensing and sealing device and the dispensing container, a flow connection (34) to the ambient airspace.

10. A dispensing apparatus according to claim 7, **characterized in that** the control unit comprises a computer program configured to control the function of the feeder device (18) and the dispensing and sealing device (22, 22') synchronously such that material is fed simultaneously from at least two dispensing containers into the transfer apparatus according to said target mixing ratio.

## Patentansprüche

1. Verfahren zur Abgabe eines Pulvers und/oder körnigen Materials durch eine Abgabevorrichtung (1), wobei im Verfahren
- Material gleichzeitig von mindestens zwei Abgabebehältern (10) der Abgabevorrichtung (1) abgegeben wird,
- ein Zielmischungsverhältnis für das von jedem der mindestens zwei der Abgabebehälter (10) abgegebene Material eingestellt wird,
- der Massenstrom des von jedem der mindestens zwei Abgabebehälter (10) abgegebenen Materials unabhängig voneinander mittels mindestens einer Vorrichtung (12), die die Masse des Materials in jedem der mindestens zwei Abgabebehälter angibt (10), definiert wird,
- das Material gleichzeitig aus jedem der mindestens zwei Abgabebehälter (10) in einen von einer Unterdruckquelle (26) in einem Überführungsrohr (24) einer pneumatische Überführungsvorrichtung (16) erzeugten Gasstrom an aufeinanderfolgenden Stellen im Rohr abgegeben wird, mittels dessen pneumatischer Überführungsvorrichtung (16) das Material in einen mit der pneumatischen Überführungsvorrichtung (16) kombinierten Aufnahmebehälter (14) überführt wird, wobei die Unterdruckquelle in Richtung des Gasstroms nach dem Aufnahmebehälter (14) angekoppelt ist,
- das von jedem der Abgabebehälter in das Überführungsrohr (24) abgegebene Material auf der Grundlage des Massenstroms des abgegebenen Materials und des Zielmischungsverhältnisses gesteuert wird,
- das Material mit einer Abgabe- und Verschließvorrichtung (22, 22') in den pneumatischen Förderer (16) abgegeben wird, wodurch gleichzeitig die Übertragung der Unterdruckwirkung des pneumatischen Förderers auf den Abgabebehälter (10) minimiert wird, **dadurch gekennzeichnet, dass**
- bei dem Verfahren jeder Abgabebehälter (10) durch eine direkte Strömungsverbindung mit der Umgebungsluft auf Umgebungsdruck gehalten wird,
- die Abgabe der mindestens zwei Materialien gleichzeitig gestartet und beendet wird.

2. Verfahren nach Anspruch 1, **dadurch gekennzeichnet, dass** bei dem Verfahren der Massenstrom des aus jedem Abgabebehälter (10) abgegebenen Materials durch Wiegen des Abgabebehälters (10) und des darin enthaltenen Materials in vordefinierten Zeitintervallen während der Abgabe definiert wird, und dass die Abgabe gesteuert wird, indem ein Steuersignal auf der Grundlage der definierten Massenstromeinstellung des Materials sowie auf der Grundlage des Wiegens gebildet wird.

3. Verfahren nach Anspruch 1, **dadurch gekennzeichnet, dass** bei dem Verfahren das Material unter Verwendung einer Zuführvorrichtung (18) aus dem Abgabebehälter abgegeben wird und die Abgabe- und Verschließvorrichtung (22, 22') in Strömungsrichtung des Materials nacheinander angeordnet ist, und dass sowohl die Zuführvorrichtung (18) als auch die Abgabe- und Verschließvorrichtung (22, 22') auf der Grundlage des Massenstroms jedes abgegebenen Materials und/oder des Zielmischungsverhältnisses gesteuert werden.

4. Verfahren nach Anspruch 1, **dadurch gekennzeichnet, dass** bei dem Verfahren die Überführungsvorrichtung (16) als pneumatischer Förderer fungiert, und dass bei dem Verfahren Ersatzluft in die Vorrichtung durch eine Strömungsverbindung zu dem Umgebungsluftraum, der zwischen der Abgabe- und Verschließvorrichtung (22, 22') und dem Abgabebehälter (10) angeordnet ist, geleitet wird.

5. Abgabevorrichtung (1) für ein Pulver und/oder körniges Material, umfassend
- mindestens zwei Abgabebehälter (10) zum Speichern des abzugebenden Materials zur Abgabe, wobei jeder Abgabebehälter (10) mit mindestens einer Vorrichtung (12) ausgestattet ist, die die Masse des in dem Abgabebehälter enthaltenen Materials anzeigt,
- eine pneumatische Überführungsvorrichtung (16), die mit einer Unterdruckquelle (26) versehen ist, die so angeordnet ist, um Material aus dem Abgabebehälter (10) aufzunehmen und das Material zu einem Aufnahmebehälter (14) zu überführen, der mit der pneumatischen Überführungsvorrichtung (16) kombiniert ist, wobei die Unterdruckquelle in Richtung des Gasstroms nach dem Aufnahmebehälter (14) angekoppelt ist,
- eine Steuereinheit (20), die angeordnet ist, die Funktion der Abgabevorrichtung zu steuern (1), die Steuereinheit umfassend:
- für die abzugebenden Materialien, die in mindestens zwei Abgabebehältern (10) enthalten sind, Daten bezüglich des Zielmischungsverhältnisses in der Materialmischung,
- für die abzugebenden Materialien, die in mindestens zwei Abgabebehältern (10) enthalten sind, Daten bezüglich des einzelnen Abgabemassenstroms in Abhängigkeit des Zielmischungsverhältnisses,
- eine Anordnung zum Empfangen von Massendaten von der Vorrichtung (12), die die Masse des in jedem Abgabebehälter enthaltenen Materials definieren, um den Massenstrom des aus dem Abgabebehälter abgegebenen Materials zu bestimmen,
- ausführbare Anweisungen in der Steuereinheit, um die gleichzeitige Ausgabe der abgegebenen Materialien aus mindestens zwei Abgabebehältern (10) in eine Überführungsvorrichtung auf der Grundlage des Massenstroms des Materials und des Zielmischungsverhältnisses zu steuern, und
die pneumatische Überführungsvorrichtung (16) angeordnet ist, um Material aus dem Abgabebehälter (10) in einem Gasstrom in einem Überführungsrohr (24) der pneumatischen Überführungsvorrichtung aufzunehmen und das Material für die weitere Verarbeitung zu überführen,
die Abgabevorrichtung ferner eine Abgabe- und Verschließvorrichtung (22, 22') in Verbindung mit jedem Abgabebehälter (10) umfasst, die angepasst ist, um Material aus dem Abgabebehälter in den pneumatischen Förderer abzugeben, wobei die Abgabe- und Verschließvorrichtung (22, 22') angeordnet ist, um die Übertragung der Unterdruckwirkung der Überführungsvorrichtung auf den Abgabebehälter (10) unter Umgebungsdruck zu minimieren,
**dadurch gekennzeichnet, dass** der Abgabebehälter (10) in direkter Strömungsverbindung mit der Umgebungsluft steht, und die Steuereinheit (20) ein Computerprogramm umfasst, das konfiguriert ist, um die Abgabe von Material aus mindestens zwei Speicherbehältern im Wesentlichen gleichzeitig zu starten und zu beenden.

6. Abgabevorrichtung nach Anspruch 5, **dadurch gekennzeichnet, dass** die Steuereinheit (20) ein Computerprogramm umfasst, das konfiguriert ist, um die Abgabe- und Verschließvorrichtung (22) jedes Abgabebehälters unabhängig zu steuern, um das Zielmischungsverhältnis zu erreichen.

7. Abgabevorrichtung nach Anspruch 5, **dadurch gekennzeichnet, dass** der Abgabebehälter (10) eine Zuführvorrichtung (18) umfasst, die in Strömungsrichtung des Materials vor der Abgabe- und Verschließvorrichtung (22, 22') angeordnet ist, zum Zuführen eines Materials aus dem Abgabebehälter (10) in die Abgabe- und Verschließvorrichtung (22, 22').

8. Abgabevorrichtung nach Anspruch 5, **dadurch gekennzeichnet, dass** die Abgabe- und Verschließvorrichtung (22, 22') durch eine flexible Kupplung (32) mit dem Abgabebehälter gekoppelt ist.

9. Abgabevorrichtung nach Anspruch 5, **dadurch gekennzeichnet, dass** von der Vorrichtung aus zwischen der Abgabe- und Verschließvorrichtung und dem Abgabebehälter eine Strömungsverbindung (34) zum Umgebungsluftraum angeordnet ist.

10. Abgabevorrichtung nach Anspruch 7, **dadurch gekennzeichnet, dass** die Steuereinheit ein Computerprogramm umfasst, das so konfiguriert ist, dass es die Funktion der Zuführvorrichtung (18) und der Abgabe- und Verschließvorrichtung (22, 22') synchron steuert, derart dass Material gleichzeitig von mindestens zwei Abgabebehältern in die Überführungsvorrichtung gemäß dem Zielmischungsverhältnis zugeführt wird.

## Revendications

1. Procédé de distribution d'un matériau pulvérulent et/ou granulaire par un appareil de distribution (1), ledit procédé comprenant les étapes suivantes :
- du matériau est distribué simultanément à partir d'au moins deux récipients de distribution (10) de l'appareil de distribution (1),
- un rapport de mélange cible pour le matériau distribué à partir de chacun des au moins deux récipients de distribution (10) est fixé,
- le débit massique du matériau distribué à partir de chacun des au moins deux récipients de distribution (10) est défini indépendamment à l'aide d'au moins un appareil (12) indiquant la masse de matériau dans chacun des au moins deux récipients de distribution (10),
- le matériau est distribué simultanément à partir de chacun des au moins deux récipients de distribution (10) dans un flux de gaz généré par une source de pression négative (26) dans un tuyau de transfert (24) d'un appareil de transfert pneumatique (16), à des endroits consécutifs dans le tuyau, l'appareil de transfert pneumatique (16) permettant de transférer du matériau vers un récipient de réception (14) combiné à l'appareil de transfert pneumatique (16), dans lequel la source de pression négative est accouplée en aval du récipient de réception (14) dans la direction du flux de gaz,
- le matériau distribué dans le tuyau de transfert (24) à partir de chacun des récipients de distribution est commandé sur la base du débit massique du matériau distribué et du rapport de mélange cible,
- le matériau est distribué dans le convoyeur pneumatique (16) à l'aide d'un dispositif de distribution et de scellage (22, 22'), lequel minimise simultanément la transmission de l'effet de pression négative du convoyeur pneumatique au récipient de distribution (10), **caractérisé en ce que**
- dans le procédé, chaque récipient de distribution (10) est maintenu à une pression ambiante par une connexion fluidique directe avec l'air ambiant,
- la distribution des au moins deux matériaux commence et se termine simultanément.

2. Procédé selon la revendication 1, **caractérisé en ce que**, dans le procédé, le débit massique du matériau distribué à partir de chaque récipient de distribution (10) est défini par pesage du récipient de distribution (10) et du matériau contenu dans celui-ci à des intervalles de temps prédéfinis pendant la distribution, et **en ce que** la distribution est commandée en formant un signal de commande sur la base du réglage de débit massique défini pour le matériau ainsi que sur la base du pesage.

3. Procédé selon la revendication 1, **caractérisé en ce que**, dans le procédé, le matériau est distribué à partir du récipient de distribution à l'aide d'un dispositif d'alimentation (18) et du dispositif de distribution et de scellage (22, 22') disposés l'un après l'autre dans la direction d'écoulement du matériau, et **en ce que** le dispositif d'alimentation (18) et le dispositif de distribution et de scellage (22, 22') sont tous deux commandés sur la base du débit massique de chaque matériau distribué et/ou du rapport de mélange cible.

4. Procédé selon la revendication 1, **caractérisé en ce que**, dans le procédé, l'appareil de transfert (16) fonctionne comme un convoyeur pneumatique, et **en ce que**, dans le procédé, de l'air de remplacement est guidé dans l'appareil à travers une connexion fluidique avec l'espace d'air ambiant entre le dispositif de distribution et de scellage (22, 22') et le récipient de distribution (10).

5. Appareil de distribution (1) pour la distribution d'un matériau pulvérulent et/ou granulaire, comprenant
- au moins deux récipients de distribution (10) permettant de stocker le matériau à distribuer pour la distribution, dans lequel chaque récipient de distribution (10) est équipé d'au moins un appareil (12) indiquant la masse du matériau contenu dans le récipient de distribution,
- un appareil de transfert pneumatique (16) doté d'une source de pression négative (26), lequel est conçu pour recevoir du matériau à partir du récipient de distribution (10) et pour transférer le matériau vers un récipient de réception (14) combiné à l'appareil de transfert pneumatique (16), dans lequel la source de pression négative est accouplée en aval du récipient de réception (14) dans la direction du flux de gaz,
- une unité de commande (20) conçue pour commander le fonctionnement de l'appareil de distribution (1), l'unité de commande comprenant :
- pour les matériaux à distribuer contenus dans au moins deux récipients de distribution (10), des données concernant le rapport de mélange cible dans le mélange de matériaux,
- pour le matériau à distribuer contenu dans chaque récipient de distribution (10), des données concernant le débit massique individuel de la distribution en fonction du rapport de mélange cible,
- un système destiné à recevoir des données de masse en provenance de l'appareil (12) indiquant la masse de matériau contenue dans chaque récipient de distribution afin de définir le débit massique du matériau distribué à partir du récipient de distribution,
- des instructions exécutables dans l'unité de commande afin de commander la distribution simultanée des matériaux distribués à partir d'au moins deux récipients de distribution (10) dans un appareil de transfert sur la base du débit massique du matériau et du rapport de mélange cible, et
- l'appareil de transfert pneumatique (16) est conçu pour recevoir du matériau à partir du récipient de distribution (10) dans un flux de gaz dans un tuyau de transfert (24) de l'appareil de transfert pneumatique et pour transférer le matériau pour un traitement ultérieur,
- l'appareil de distribution comprenant en outre un dispositif de distribution et de scellage (22, 22') en connexion avec chaque récipient de distribution (10), adapté pour distribuer du matériau à partir du récipient de distribution dans le convoyeur pneumatique, ledit dispositif de distribution et de scellage (22, 22') étant conçu pour minimiser minimise la transmission de l'effet de pression négative de l'appareil de transfert sur le récipient de distribution (10) sous une pression ambiante,
**caractérisé en ce que** le récipient de distribution (10) est en connexion fluidique directe avec l'air ambiant, et l'unité de commande (20) comprend un programme informatique configuré pour démarrer et terminer la distribution de matériau à partir d'au moins deux récipients de stockage substantiellement simultanément.

6. Appareil de distribution selon la revendication 5, **caractérisé en ce que** l'unité de commande (20) comprend un programme informatique configuré pour commander le dispositif de distribution et de scellage (22) de chaque récipient de distribution indépendamment afin d'atteindre ledit rapport de mélange cible.

7. Appareil de distribution selon la revendication 5, **caractérisé en ce que** le récipient de distribution (10) comprend un dispositif d'alimentation (18) disposé en aval du dispositif de distribution et de scellage (22, 22') dans la direction d'écoulement du matériau, pour alimenter le dispositif de distribution et de scellage (22, 22') en matériau à partir du récipient de distribution (10).

8. Appareil de distribution selon la revendication 5, **caractérisé en ce que** le dispositif de distribution et de scellage (22, 22') est accouplé à l'aide d'un accouplement souple (32) au récipient de distribution.

9. Appareil de distribution selon la revendication 5, **caractérisé en ce qu'**une connexion fluidique (34) avec l'espace d'air ambiant est établie à partir de l'appareil, entre le dispositif de distribution et de scellage et le récipient de distribution.

10. Appareil de distribution selon la revendication 7, **caractérisé en ce que** l'unité de commande comprend un programme informatique configuré pour commander le fonctionnement du dispositif d'alimentation (18) et du dispositif de distribution et de scellage (22, 22') de façon synchrone, de manière à alimenter du matériau simultanément à partir d'au moins deux récipients de distribution vers l'appareil de transfert selon ledit rapport de mélange cible.
